# EUROPÄISCHE PATENTANMELDUNG

(11) **EP 3 240 151 A1**
(43) Veröffentlichungstag der Anmeldung: **01.11.2017**
(21) Anmeldenummer: 17163481.9
(22) Anmeldetag: 29.03.2017
(51) Int. Cl.: H02K 5/02, H02K 5/15, H02K 15/14

(54) **ELEKTRONISCH KOMMUTIERTER GLEICHSTROMMOTOR**

(30) Priorität: 15.04.2016 DE 102016206399
(71) Anmelder: Bühler Motor GmbH, 90459 Nürnberg (DE)
(72) Erfinder: Guttenberger, Richard, 91171 Greding (DE)

(57) **Zusammenfassung**

Die Erfindung betrifft einen elektronisch kommutierten Gleichstrommotor (1), mit einem aus einem Kunststoffmaterial bestehenden Gehäuse (5), einem bewickelten Stator (4), einem Rotor (2) und einem aus einem Kunststoffmaterial bestehenden Lagerschild (6). Aufgabe der Erfindung ist es bei einem gattungsgemäßen Gleichstrommotor (1) für eine bauraumsparende Verbindung von Lagerschild (6) und Gehäuse (5) bzw. Deckel (10) und Gehäuse (5) oder Anbauteil und Gehäuse (5) zu sorgen, wobei keine zusätzlichen Verbindungs- oder Dichtelemente erforderlich sind und eine sehr feste und dichte Verbindung herstellbar ist. Diese Aufgabe wird erfindungsgemäß durch die Merkmale der Ansprüche 1 und 6 gelöst.

## Beschreibung

Die Erfindung betrifft einen elektronisch kommutierten Gleichstrommotor (1), mit einem aus einem Kunststoffmaterial bestehenden Gehäuse (5), einem bewickelten Stator (4), einem Rotor (2) und einem aus einem Kunststoffmaterial bestehenden Lagerschild (6).

Aus der DE 10 2009 047 332 A1 ist ein gattungsgemäßer Gleichstrommotor bekannt, bei dem verschiedene Teile mit dem Kunststoffgehäuse verschweißt sind. Es ist jedoch nicht erkennbar, wie die Fügepartner geformt sein müssen und wie der Schweißvorgang erfolgen soll.

Aufgabe der Erfindung ist es bei einem gattungsgemäßen Gleichstrommotor für eine bauraumsparende Verbindung von Lagerschild und Gehäuse bzw. Deckel und Gehäuse oder Anbauteil und Gehäuse zu sorgen, wobei keine zusätzlichen Verbindungs- oder Dichtelemente erforderlich sind und eine sehr feste und dichte Verbindung herstellbar ist.

Diese Aufgabe wird erfindungsgemäß durch die Merkmale der Ansprüche 1 und 6 gelöst. Durch die Durchmesserunterschiede zwischen dem Außendurchmesser des Lagerschilds und dem Innendurchmesser des Gehäuses wird eine Vorspannung zwischen Lagerschild und Gehäuse hergestellt. Diese Vorspannung führt bei einer Erwärmung der Schweißbereiche zum Schmelzen eines Schweißbereichs und zu einer innigen Verbindung der Fügepartner, weil sich diese geringfügig aufeinander zubewegen können.

Weiterbildungen der Erfindung werden in den Unteransprüchen dargestellt. Besonders vorteilhaft ist es, wenn die Schweißbereiche und die Breite eines Laserstrahls aufeinander abgestimmt sind, so dass keine nicht erwärmten Teilbereiche im Fügebereich möglich sind. Der Durchmesser des Gehäuses soll sich vollumfänglich verringern können.

Für die Schweißverbindung eignet sich besonders das Laserdurchstrahl-Schweißverfahren, wobei das Gehäuse (5), zumindest im Gehäuseschweißbereich (21), das Gehäusematerial für Laserstrahlen durchlässig ist. Ein Laserstrahl geeigneter Wellenlänge kann dadurch ohne das Gehäuse (5) nennenswert zu erwärmen durch seine Wandung hindurch strahlen.

Gemäß einer ersten Ausführungsform kann das Lagerschild (6), zumindest im Lagerschildschweißbereich (17), aus einem dasselbe Laserlicht absorbierendem Material bestehen oder eine dasselbe Laserlicht absorbierende Beschichtung aufweisen. Der ankommende Laserstrahl wird zum größten Teil an der Oberfläche oder im oberflächennahen Bereich absorbiert und in Wärme umgewandelt. Diese wird auch auf das Gehäuse (5) übertragen und schmilzt sowohl den Schweißbereich des Lagerschilds als auch den Schweißbereich des Gehäuses auf. Nachdem das Material ausreichend weich ist entspannt sich die Verbindung und die Schweißbereiche mischen sich und gehen eine innige Verbindung ein, die nach Abkühlung zu einer sehr festen mechanischen Verbindung führen, welche zudem sehr dicht ist.

Die Aufgabe der Erfindung wird auch durch das Verfahren nach Anspruch 6 gelöst. Dabei wird ein vormontierter Gleichstrommotor, bei welchem das Lagerschild im Gehäuse eingepresst ist, mit einem Laserstrahl bestrahlt, während eine relative Vorschubbewegung in Umfangsrichtung des Gehäuses ausgeführt wird. Dabei kann sich entweder der Laserstrahl oder der Gleichstrommotor bewegen. Bei einer rotationssymmetrischen Schweißnaht ist es am einfachsten den Gleichstrommotor rotieren zu lassen.

Um eine hohe Qualität der Schweißverbindung zu erreichen, ist vorgesehen die Schweißbereiche und die Breite eines Laserstrahls aufeinander abzustimmen, so dass keine nicht erwärmten Teilbereiche im Fügebereich möglich sind. Der Durchmesser des Gehäuses soll sich dadurch vollumfänglich verringern können, um eine innige Verbindung mit dem Lagerschild eingehen zu können. Der Laserstrahl kann zu diesem Zweck eine alternierende Bewegung in zu einer Motorachse parallelen Richtung ausführen, während die Vorschubbewegung rechtwinklig hierzu ausgeführt wird.

Alternativ zur Verwendung unterschiedlicher Fügepartner besteht auch die Möglichkeit beide Fügepartner aus einem im Wesentlichen für das Laserlicht durchlässigen Material auszuführen. Hierbei sind besondere Maßnahmen erforderlich um dennoch eine ausreichend feste und dichte Verbindung herzustellen. Dabei sollte der Laserstrahl sehr gut fokussiert sein und seine höchste Energiedichte in der Schweißstelle konzentriert sein. Um dennoch eine sichere Schweißverbindung zu erreichen ist weiter vorgesehen den Laserstrahl so zu beeinflussen, dass der Bereich höchster Energiedichte in z-Richtung moduliert wird. Zugleich muss darauf geachtet werden, dass die Oberfläche des Gehäuses nicht verformt wird. Es darf also kein zu hoher Energieeintrag im oberflächennahen Bereich erfolgen. Die verwendete Schweißeinrichtung weist daher eine modulierbare Linsenmechanik auf, wobei eine Kollimationslinse oder eine Fokussierlinse eine Oszillationsbewegung entlang der z-Achse ausführt. Der Transmissions- bzw. Absorptionsgrad ist so zu wählen, dass eine ausreichende Erwärmung der Schweißstelle möglich ist ohne die Oberfläche des Gehäuses zu beschädigen. Für das beschriebene Schweißverfahren eignet sich ein Infrarotlaser aus dem Wellenlängenbereich zwischen 0,7 und 2,5 Mikrometer.

Eine weitere wirkungsvolle Maßnahme besteht darin, den Laserstrahl durch eine Optik derart zu modifizieren, dass er an der Oberfläche einen ringförmigen oder ellipsenringförmigen Strahlquerschnitt aufweist, der bis zum Schweißbereich zu einer Kreisfläche oder einem Punkt fokussiert wird. In der Regel verlässt ein Laserstrahl die Strahlungsquelle mit einem Gauß'schen Strahlungsprofil, bei welchem das Maximum der Strahlung in der Strahlmitte ist. Wünschenswert ist in diesem Fall das Strahlungsmaximum in einem ringförmigen Bereich zu verschieben, wobei im Zentrum des Strahlungskegels ein Minimum der Strahlungsintensität vorherrscht. Auf der Oberfläche wird die Laserstrahlung daher auf einen großen Flächenbereich verteilt, sie trifft sich im Schweißbereich jedoch in einer kleinen Kreisfläche - idealisiert in einem Punkt. Auch bei einem geringen Absorptionsgrad von ca. 10 bis 20 % kann hierdurch genügend Wärme erzeugt werden um eine Schweißverbindung herzustellen.

Es ist auch möglich mehr als einen Laserstrahl zu verwenden, die unter unterschiedlichen Einstrahlwinkeln auf den Schweißbereich gerichtet sind, wobei sich die Strahlquerschnitte der verschiedenen Laserstrahlen an der Oberfläche des Gehäuses nicht oder nur geringfügig überlappen, im Schweißbereich jedoch eine sich addierende Strahlungsintensität bewirken, welche den Schweißbereich ausreichend für eine Schweißverbindung erwärmen kann.

Ein Ausführungsbeispiel der Erfindung wird nachfolgend anhand der Zeichnung näher erläutert. Es zeigen:
- Fig. 1: eine Schnittansicht durch einen erfindungsgemäßen Gleichstrommotor,
- Fig. 2: eine vergrößerte Einzelheit A aus Fig. 1 und
- Fig. 3: eine vergrößerte Einzelheit B aus Fig. 1.

Hinweis: Bezugszeichen mit Index und entsprechende Bezugszeichen ohne Apostroph bezeichnen namensgleiche Einzelheiten in den Zeichnungen und der Zeichnungsbeschreibung. Es kann sich darüber hinaus um die Verwendung in einer anderen Ausführungsform, dem Stand der Technik oder einer Variante handeln. Die Ansprüche, die Beschreibungseinleitung, die Bezugszeichenliste und die Zusammenfassung enthalten der Einfachheit halber nur Bezugszeichen ohne Index.

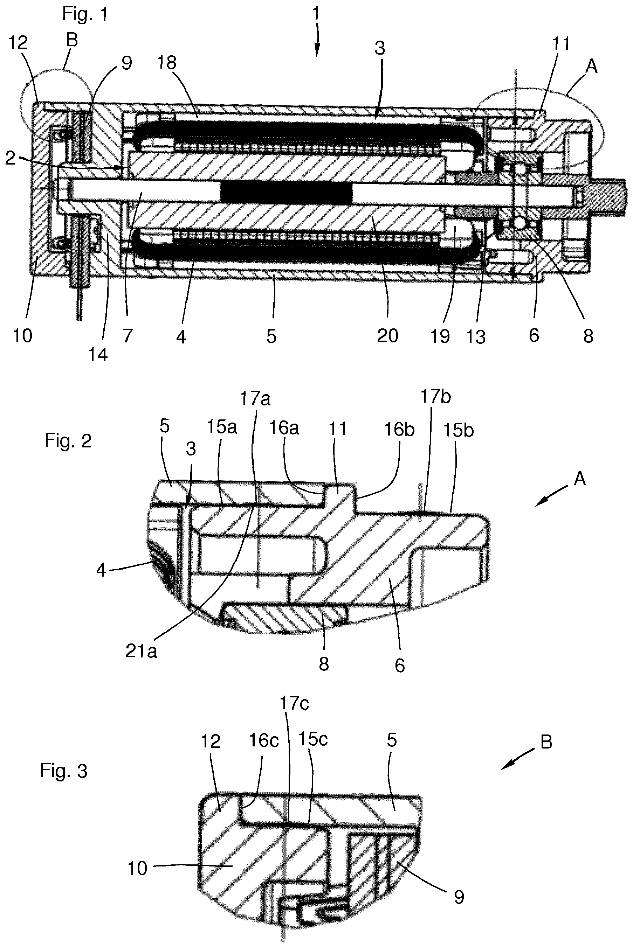

Fig. 1 zeigt eine Schnittansicht durch einen erfindungsgemäßen Gleichstrommotor 1, mit einem Gehäuse 5, einem Stator 3, einem Lagerschild 6, einem Rotor 2, einer Zwischenwand 14, einer Leiterplatte 9 und einem Gehäusedeckel 10. Der Stator 4 umfasst ein Statorblechpaket 18, eine Statorisolierung 19 und eine Statorwicklung 4. Der Rotor 2 umfasst einen hohlzylindrischen Permanentmagneten 20, eine Welle 7 und eine Abstandsbuchse 13 und ist in einer Zwischenwand 14 einerseits und in einem Kugellager 8 im Lagerschild 6 andererseits drehbeweglich gelagert. Das Lagerschild 6 weist einen Bundring 11 auf, an welchem das Gehäuse 5 axial anliegt.

Fig. 2 zeigt eine vergrößerte Einzelheit A aus Fig. 1, mit dem Lagerschild 6, dem Kugellager 8, dem Stator 3, der Statorwicklung 4 und dem Gehäuse 5. Das Lagerschild 6 umfasst den Bundring 11, welcher von einer ersten Schulterfläche 16a und einer zweiten Schulterfläche 16b axial begrenzt ist, einem ersten Schaft 15a und einen zweiten Schaft 15b. Der erste und der zweite Schaft 15a, 15b weisen Lagerschildschweißbereiche 17a, 17b auf, welche als im Durchmesser vergrößerter Bereiche ausgebildet sind. Der Außendurchmesser des Lagerschildschweißbereichs 17a ist vor der Montage größer als der Innendurchmesser des Gehäuseschweißbereichs 21. Das Gehäuse 5 und das Lagerschild 6 überlappen sich axial im Bereich des Schaftes 15a und das Gehäuse 5 liegt an der ersten Schulterfläche 16a an. Der zweite Schaft 15b dient zur Befestigung eines Anbauteils. Das Anbauteil kann ein Getriebe oder eine Pumpe sein. Es besteht die Möglichkeit ein Hohlrad eines Planetengetriebes unmittelbar auf den Schaft 15b des Lagerschilds 6 zu verschweißen. Hierzu ist der Lagerschildschweißbereich 17b vorgesehen. Der Außendurchmesser des Lagerschildschweißbereichs 17b ist vor der Montage größer als der Innendurchmesser eines Hohlradschweißbereichs. Nach einem Einpressen des Lagerschilds 6 in das Gehäuse 5 sind diese Bauteile gegeneinander verspannt. Die Verspannung löst sich teilweise durch Erhitzung und Aufschmelzen der Schweißbereiche 17a und 21 a. Dabei bewegen sich beiden Teile radial geringfügig aufeinander zu und verbinden sich innig miteinander. Bei Herstellung einer vollumfänglichen Schweißnaht entsteht eine hermetisch dichte Schweißnaht. Die Schulterfläche 16b dient als Axialbegrenzung für das Hohlrad.

Fig. 3 zeigt eine vergrößerte Einzelheit B aus Fig. 1, mit dem Gehäuse 5, dem Gehäusedeckel 10 und der Leiterplatte 9. Der Gehäusedeckel 10 weist einen flanschartigen Rand 12 auf, welcher von einer Schulterfläche 16c begrenzt ist. Das Gehäuse 5 liegt axial an der Schulterfläche 16c an und ist einstückig mit der Zwischenwand 14. Das Gehäuse 5, die Zwischenwand 14 und der Gehäusedeckel 10 bilden einen Aufnahmeraum für die Leiterplatte 9. Weiter umfasst der Gehäusedeckel einen Schaft 15c, der einen Lagerschildschweißbereich 17c aufweist. Der Außendurchmesser des Lagerschildschweißbereichs 17c ist vor der Montage größere als der Innendurchmesser eines Gehäuseschweißbereichs 21 im Berührungsbereich auf.

### Bezugszeichenliste

- 1: Gleichstrommotor
- 2: Rotor
- 3: Stator
- 4: Statorwicklung
- 5: Gehäuse
- 6: Lagerschild
- 7: Welle
- 8: Kugellager
- 9: Leiterplatte
- 10: Gehäusedeckel
- 11: Bundring
- 12: Rand
- 13: Abstandsbuchse
- 14: Zwischenwand (Bestandteil des Gehäuses)
- 15: Schaft
- 16: Schulterfläche
- 17: Lagerschildschweißbereich
- 18: Statorblechpaket
- 19: Statorisolierung
- 20: Permanentmagnet
- 21: Gehäuseschweißbereich

## Patentansprüche

1. Elektronisch kommutierter Gleichstrommotor (1), mit einem aus einem Kunststoffmaterial bestehenden Gehäuse (5), einem bewickelten Stator (4), einem Rotor (2) und einem aus einem Kunststoffmaterial bestehenden Lagerschild (6), **dadurch gekennzeichnet, dass** das Lagerschild (6) und/oder ein Gehäusedeckel (10) im Vormontagezustand einen Lagerschildschweiß-bereich (17) aufweist, dessen Außendurchmesser größer ist als der Innendurchmesser des Gehäuses (5) in einem Gehäuseschweißbereich (21).

2. Gleichstrommotor nach Anspruch 1, **dadurch gekennzeichnet, dass** die Breite der Schweißbereiche und die Breite eines Laserstrahls aufeinander abgestimmt sind.

3. Gleichstrommotor nach Anspruch 1 oder 2, **dadurch gekennzeichnet, dass** das Gehäuse (5) zumindest im Gehäuseschweißbereich (21) aus einem Material besteht, das für Laserstrahlen durchlässig ist.

4. Gleichstrommotor nach Anspruch 3, **dadurch gekennzeichnet, dass** das Lagerschild (6) zumindest im Lagerschildschweißbereich (17) aus einem dasselbe Laserlicht absorbierendem Material besteht oder eine dasselbe Laserlicht absorbierende Beschichtung aufweist.

5. Gleichstrommotor nach Anspruch 3, **dadurch gekennzeichnet, dass** das Lagerschild (6) zumindest im Lagerschildschweißbereich (17) für dieselben Laserstrahlen durchlässig ist.

6. Verfahren zur Herstellung eines elektronisch kommutierten Gleichstrommotors (1), mit einem aus einem Kunststoffmaterial bestehenden Gehäuse (5), einem bewickelten Stator (4), einem Rotor (2) und einem aus einem Kunststoffmaterial bestehenden Lagerschild (6), **gekennzeichnet durch** folgende Verfahrensschritte: a) Bereitstellen des vormontierten Gleichstrommotors (1), mit im Gehäuses (5) eingepressten Lagerschilds (6); b) Bestrahlung des Gehäuses (5) mit einem Laserstrahl, wobei der Laserstrahl eine relative Vorschubbewegung in Umfangsrichtung des Gehäuses (5) ausführt.

7. Verfahren nach Anspruch 6, **dadurch gekennzeichnet, dass** der Laserstrahl während der Vorschubbewegung eine alternierende Bewegung in zu einer Motorachse parallelen Richtung ausgeführt.

8. Verfahren nach Anspruch 6 oder 7, **dadurch gekennzeichnet, dass** der Laserstrahl während des Schweißvorgangs eine modulierte Bewegung in z-Richtung ausführt.

9. Verfahren nach Anspruch 6, 7 oder 8, **dadurch gekennzeichnet, dass** der Laserstrahl durch eine Optik derart modifiziert wird, dass er an der Oberfläche einen ringförmigen oder ellipsenringförmigen Strahlquerschnitt aufweist, der bis zum Schweißbereich zu einer Kreisfläche oder einem Punkt fokussiert wird.

10. Verfahren nach Anspruch 6, 7, 8 oder 9, **dadurch gekennzeichnet, dass** mehr als ein Laserstrahl unter unterschiedlichen Einstrahlwinkeln auf den Schweißbereich gerichtet sind, wobei sich die Strahlquerschnitte der verschiedenen Laserstrahlen an der Oberfläche des Gehäuses nicht oder nur geringfügig überlappen.
